# EUROPÄISCHE PATENTSCHRIFT

(11) **EP 0 613 537 B1**
(45) Veröffentlichungstag und Bekanntmachung des Hinweises auf die Patenterteilung: **20.11.1996**
(21) Anmeldenummer: 93919025.2
(22) Anmeldetag: 21.09.1993
(51) Int. Cl.: F16L 21/03

(54) **ABDICHTUNG ZWISCHEN ZWEI INEINANDERSTECKBAREN BETONFERTIGTEILEN**
SEAL BETWEEN TWO INTERLOCKING CONCRETE COMPONENTS
JOINT D'ETANCHEITE ENTRE DEUX PIECES PREFABRIQUEES EN BETON EMBOITABLES L'UNE DANS L'AUTRE

(30) Priorität: 21.09.1992 DE 9212665 U
(43) Veröffentlichungstag der Anmeldung: 07.09.1994
(73) Patentinhaber: Forsheda-Stefa GmbH, D-63477 Maintal (DE)
(72) Erfinder: Preisendörfer, Gerhard, D-63150 Heusenstamm (DE)
(74) Vertreter: Linde, Leif
(86) Internationale Anmeldenummer: DE9300898
(87) Internationale Veröffentlichungsnummer: WO9407073

(56) Entgegenhaltungen:
- EP-A- 0 358 256
- CH-A- 405 837
- DE-A- 3 336 339

## Beschreibung

Die Erfindung bezieht sich auf eine Abdichtung zwischen zwei ineinandersteckbaren Betonfertigteilen, insbesondere Rohren, mit folgenden Merkmalen:
Jedes Betonfertigteil weist eine Glockenmuffe mit Muffengrund und Muffenspiegel bzw. ein Spitzende auf, die unter Zwischenfügung einer Dichtung ineinanderpassen; die Dichtung ist mit Verankerungsmitteln in der Glockenmuffe befestigt.

Abdichtungen dieser Art sind in zahlreichen Ausführungsformen bekannt geworden (DE-21 40 546, 22 52 089, 29 35 392, 31 00 192, 32 32 823, 33 45 569, 35 07 909 und 41 08 851). Bei diesen Muffenabdichtungen wird die Dichtung bei der Herstellung des Betonfertigteils mit in die Muffe eingebunden und so verankert. Zur Formgebung der Muffe wird ein Formwerkzeug, die sogenannte Untermuffe, verwendet, in die ein Formring, z.B. aus geschäumtem Polystyrol, eingelegt wird, um die Dichtung an richtiger Stelle zu positionieren und beim Gießen des Betonfertigteils zu halten. Später wird der Formring entfernt. Es ist bekannt, daß man auch ohne entfernbaren Fomring bei einer Abdichtung der eingangs angegebenen Art auskommt (DE-33 45 569, 35 07 909 und 41 08 851). In diesem Fall wird relativ viel teures Elastomermaterial benötigt, um die Abdichtung zu verwirklichen.

Der Erfindung liegt die Aufgabe zugrunde, eine Abdichtung der eingangs angegebenen Art zu schaffen, die wirtschaftlicher hergestellt werden kann, als dies bisher der Fall war.

Die gestellte Aufgabe wird dadurch gelöst, daß die Dichtung einen soliden Elastomerdichtbereich und einen fahnenartigen Fortsatz aufweist, der einen Ringraum zur Aufnahme eines zusammenpreßbaren Leichtmaterialkörpers abdeckt und den Muffengrund am übergang zum Muffenspiegel auskleidet.

Gegenüber der Ausführungsform mit entfernbarem Formring ist diese Abdichtung kostengünstiger herzustellen, weil kein Formring entfernt werden muß. Gegenüber der Abdichtung ohne Formring wird bei der Erfindung an Elastomermaterial gespart, weil dieses im wesentlichen nur für den Dichtbereich eingesetzt wird, abgesehen von dem dünnen fahnenartigen Fortsatz, der den Leichtmaterialkörper abdeckt.

Ausgestaltungen und Weiterbildungen der Erfindung sind in den Unteransprüchen gekennzeichnet.

Ausführungsbeispiele der Erfindung werden anhand der Zeichnung beschrieben. Dabei zeigt:
- Fig. 1: einen Schnitt durch den Randbereich einer Glockenmuffe bei deren Herstellung mit einer ersten Ausführungsform einer Dichtung,
- Fig. 2: einen Schnitt durch eine zweite Ausführungsform der Dichtung und
- Fig. 3: eine Abdichtung in ihrer Funktion.

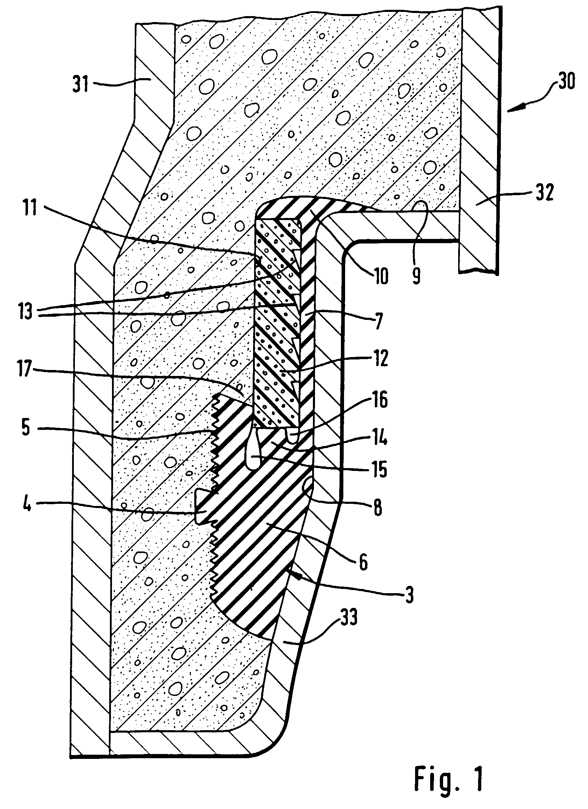

Fig. 1 zeigt die Herstellung eines Betonrohres anhand des Abschnittes einer Gießform 30, die einen Außenmantel 31, einen Innenmantel 32 und eine ringförmige Untermuffe 33 aufweist. Dargestellt ist lediglich ein Teil der Glockenmuffe 1, man muß sich die Form wesentlich höher und nach rechts ergänzt vorstellen, wobei das Spitzende 2 am oberen Ende angeformt wird. In die Glockenmuffe 1 einbezogen ist eine Dichtung 3, die durch Füße 4 und Verzahnungen 5 im Beton der Glockenmuffe verankert ist. Die Dichtung 3 weist einen soliden Elastomerkörper 6 und einen dünnen, fahnenartigen Fortsatz 7 auf, welche die sich axial erstreckenden Innenseite der Muffe, den sogenannten Muffengrund 8, und etwas vom Muffenspiegel 9 bedecken. An dem Fortsatz 7 ist ein T-förmiger Kopf 10 angeformt, wobei die Teile 6, 7 und 10 der Dichtung einen Ringraum 11 umgrenzen, in welchem ein zusammenpreßbarer Leichtmaterialkörper 12 untergebracht ist. Haken oder Zahnausbildungen 13 an dem Fortsatz 7 sorgen dafür, daß der Leichtmaterialkörper 12 sicher in dem Ringraum 11 gehalten wird. Der Elastomerkörper 6 weist einen in Richtung auf den Ringraum 11 weisenden Lappen 14 auf, wodurch axiale Nuten 15 und 16 gebildet sind, die sich in den Ringraum 11 öffnen. Zwischen Ringraum 11 und dem Elastomerkörper 6 ist im übrigen eine Stufe 17 angeordnet.

Der Leichtmaterialkörper 12 besteht aus einem zusammenpreßbaren Material, wie es geschäumtes Polystyrol darstellt, welches aber genügend Standfestigkeit hat, um die beim Gießen des Betonfertigteils auftretenden Drücke auszuhalten, ohne zu kollabieren. Wie ersichtlich, liegt das Polystyrol als zylindrischer Ring mit rechteckigem Querschnitt vor, und solche Ringe können leicht hergestellt werden. Man kann beispielsweise Rohrmaterial in Stücke schneiden, es ist aber auch möglich, Plattenmaterial ringförmig zu biegen und Längsränder mittels Klebeband zu umreifen. Das geschäumte Polystyrol ist andererseits relativ zu dem Elastomermaterial genügend nachgiebig, so daß bei ineinandergesteckten Betonrohren im wesentlichen nur der Elastomerkörper 6 trägt und somit die Abdichtung zwischen den Rohren bewirkt.

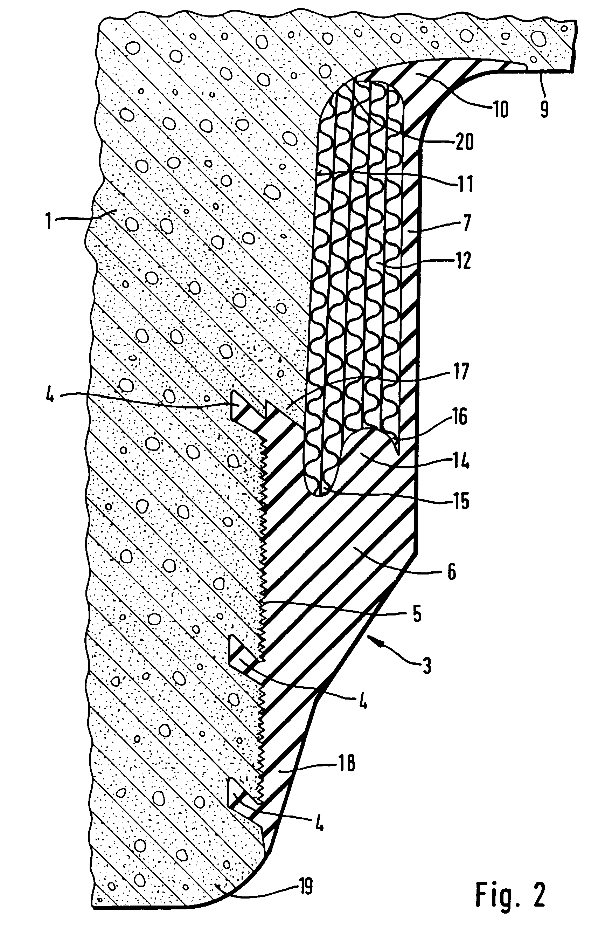

Fig. 2 zeigt eine zweite Ausführungsform der Dichtung 3. Diese weist einen keilförmigen Fortsatz 18 auf, der bis nahe der Einführungsabrundung 19 der Glockenmuffe 1 reicht. Die Dichtung ist mit drei schwalbenschwanzförmigen Füßen 4 in die Glockenmuffe 1 eingebunden. Der Leichtmaterialkörper 12 ist als ein Wickel aus Wellpappe hergestellt, dessen Lagen sich leicht so gegeneinander verschieben lassen, daß sie in die Nut 15 hineinragen. Dadurch wird eine Abrundung 20 am übergang des Muffengrundes zum Muffenspiegel begünstigt, und außerdem wird die Pappe besser an der Dichtung festgeklemmt. Die vergrößerte radiale Dicke der Dichtung ermöglicht es, größere Spaltweiten zwischen Glockenmuffe und Spitzende zu überbrücken.

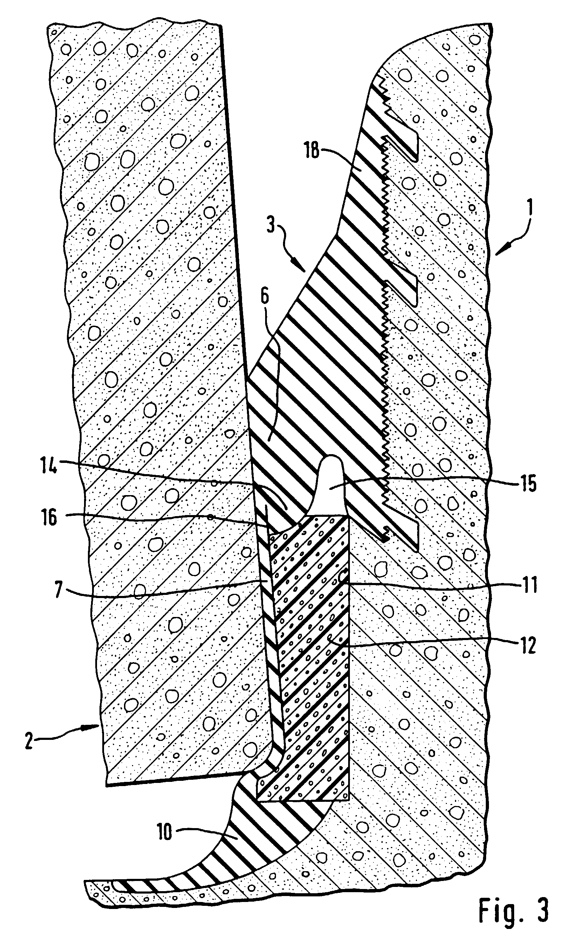

Fig. 3 zeigt das Zusammenwirken von Glockenmuffe 1, Spitzende 2 und Dichtung 3. Wenn Betonrohre zusammengesteckt werden, dann fluchten deren Achsen nur in den wenigsten Fällen, sei es, daß eine exakte Ausrichtung nicht gelingt, sei es, daß ein gewisser Winkel zwischen benachbarten Rohren erwünscht ist. In diesen Fällen wird das Spitzende 2 die Dichtung 3 im Bereich des Leichtmaterialkörpers 12 eindrücken, wie es dargestellt ist. Unter der radialen Last zwischen Glockenmuffe und Spitzende wird ferner die Lücke 16 verschwinden, und der Lappen 14 wird sich in den Ringraum 11 unter teilweiser Verdrängung des Leichtmaterialkörpers 12 hinein ausdehnen.

Wenn der Leichtmaterialkörper 12 unter stärkere radiale Last gerät, kollabiert er, so daß insofern ein Freiraum am Muffengrund nahe des Muffenspiegels geschaffen wird. Es wird also eine Abdichtung geschaffen, die sich wie die bekannte Abdichtung mit entfernbarem Formring verhält, wobei jedoch der hier verwendete Formring - der Leichtmaterialkörper 12 - nicht entfernt werden muß. Dies führt zu vereinfachter Handhabung und damit zu Kostenersparnissen.

## Patentansprüche

1. Abdichtung zwischen zwei ineinandersteckbaren Betonfertigteilen, insbesondere Rohren, mit folgenden Merkmalen:
jedes Betonfertigteil weist eine Glockenmuffe (1) mit Muffengrund (8) und Muffenspiegel (9) bzw. ein Spitzende (1) auf, die unter Zwischenfügung einer Dichtung (3) ineinanderpassen;
die Dichtung (3) ist mit Verankerungsmitteln (4, 5) in der Glockenmuffe (1) befestigt und weist einen soliden Elastomerdichtbereich (6) und einen Nachgiebigkeitsbereich (7, 12) auf, der so beschaffen ist, daß er Belastungen standhält , wie sie beim Gießen von Betonfertigteilen anzutreffen sind, jedoch gegenüber den bei der Montage und dem Betrieb von ineinandergesteckten Betonfertigteilen auftretenden Drücken zusammenpreßbar ist,
dadurch gekennzeichnet,
daß der Nachgiebigkeitsbereich durch einen fahnenartigen Fortsatz (7), der einen Ringraum (11) zur Muffenglocke hin abdeckt und den Muffengrund (8) am Übergang zum Muffenspiegel (9) auskleidet, sowie einen Leichtmaterialkörper (12) gebildet wird, der im Ringraum (11) sitzt.

2. Abdichtung nach Anspruch 1,
dadurch gekennzeichnet,
daß der fahnenartige Fortsatz (7) mit Zahnausbildungen (13) versehen ist, um den Leichtmaterialkörper (12) beim Gießen der Glockenmuffe (1) festzuhalten.

3. Abdichtung nach Anspruch 1 oder 2,
dadurch gekennzeichnet,
daß der Leichtmaterialkörper aus geschäumtem Polystyrol besteht.

4. Abdichtung nach Anspruch 1 oder 2,
dadurch gekennzeichnet,
daß der Leichtmaterialkörper (12) aus gewickelter Wellpappe besteht.

5. Abdichtung nach einem der Ansprüche 1 bis 4,
dadurch gekennzeichnet,
daß der Leichtmaterialkörper (12) im wesentlichen zylindrisch ist.

6. Abdichtung nach einem der Ansprüche 1 bis 5,
dadurch gekennzeichnet,
daß der Elastomerdichtbereich (6) der Dichtung (3) eine im Vergleich zum Ringbereich (11) dickere Abmessung in radialer Richtung aufweist.

7. Abdichtung nach einem der Ansprüche 1 bis 6,
dadurch gekennzeichnet,
daß der Elastomerdichtbereich (6) der Dichtung (3) mit einem dünneren, keilförmigen Fortsatz (18) bis nahe der Einführungsabrundung (19) der Glockenmuffe reicht.

8. Abdichtung nach einem der Ansprüche 1 bis 7,
dadurch gekennzeichnet,
daß der Elastomerdichtbereich (6) mit axialen Nuten (15, 16) versehen ist, die zum Ringbereich (11) offen sind.

9. Abdichtung nach einem der Ansprüche 1 bis 8,
dadurch gekennzeichnet,
daß der fahnenartige Fortsatz (7) einen T-förmigen Kopf (10) aufweist.

## Claims

1. A sealing device between two interlocking concrete components, especially pipes, including the following features: each concrete component has a socket (1) with an inner surface (8) as well as a bottom surface (9) and a spigot end (1), respectively, which under intermediate connection of a seal (3) fit in each other;
the seal (3) being fixed in the socket (4) by means of anchorage means (4, 5) and having a solid elastomeric sealing region (6) and a resilient region (7, 12) which is adapted so as to resist loads of the kind appearing when moulding the concrete components but is compressible under the influence of pressures appearing when mounting and using the interlocking concrete components,
**characterized** in that the resilient region is constituted by a flap-shaped projection (7) which covers an annular space (11) towards the socket and lines the inner surface (8) of the socket at the transition to the bottom surface (9) of the socket as well as by a body (12) of light material positioned in the annular space (11).

2. A sealing device as claimed in claim 1, **characterized** in that the flap-shaped projection (7) is provided with teeth (13) for keeping the body (12) of light material in place when the socket (1) is being moulded.

3. A sealing device as claimed in claim 1 or 2, **characterized** in that the body of light material consists of foamed polystyrene plastic.

4. A sealing device as claimed in claim 1 or 2, **characterized** in that the body (12) of light material consists of wound corrugated cardboard.

5. A sealing device as claimed in any of claims 1 to 4, **characterized** in that the body (12) of light material is substantially cylindrical.

6. A sealing device as claimed in any of claims 1 to 5, **characterized** in that the elastomeric sealing region (6) of the seal (3) has larger dimension in radial direction than the annular space (11).

7. A sealing device as claimed in any of claims 1 to 6, **characterized** in that the elastomeric sealing region (6) of the seal (3) extends to the vicinity of the entering chamfer of the socket by means of a thinner, wedge-shaped continuation (18).

8. A sealing device as claimed in any of claims 1 to 7, **characterized** in that the elastomeric sealing region (6) is provided with axially extending grooves (15, 16) which are open towards the annular space (11).

9. A sealing device as claimed in any of claims 1 to 8, **characterized** in that the flap-shaped projection (7) has a T-shaped head (10).

## Revendications

1. Dispositif d'étanchéité entre deux éléments finis en béton susceptibles d'être raccordés par emboîtement, en particulier des tuyaux, ayant les caractéristiques suivantes :
- chaque élément fini en béton présente l'un un about femelle (1) en tulipe avec une surface latérale intérieure (8) et une surface de fond (9) et l'autre un about mâle (1), ces deux abouts s'emboîtant l'un dans l'autre avec un joint (3) intercalé,
- le joint (3) est fixé à l'aide de moyen d'ancrage (4, 5) dans l'about femelle (1) et présente une zone d'étanchéité (6) solide en élastomère et une zone (7), 12) souple ou déformable qui est conformée de manière à supporter des charges telles qu'elles apparaissent lors du moulage d'éléments finis en béton, mais qui peut être comprimée sous l'effet des pressions apparaissant lors du montage et du fonctionnement d'éléments finis en béton raccordés par emboîtement,
**caractérisé** par le fait
que la zone souple est constituée par un prolongement (7) qui recouvre un espace annulaire (11) par rapport à l'about femelle et sert de revêtement à la surface latérale intérieure (8) à l'endroit du raccordement avec la surface de fond (9) de l'about femelle, ainsi que par un corps (12) en matériau léger disposé dans ledit espace annulaire (11).

2. Dispositif d'étanchéité suivant la revendication 1,
**caractérisé** par le fait
que le prolongement (7) est muni de dentures (13) pour maintenir en place le corps (12) en matériau léger lors du moulage de l'about femelle (1).

3. Dispositif d'étanchéité suivant la revendication 1 ou 2,
**caractérisé** par le fait
que le corps en matériau léger est constitué de polystyrène expansé.

4. Dispositif d'étanchéité suivant la revendication 1 ou 2,
**caractérisé** par le fait
que le corps (12) en matériau léger est constitué de carton ondulé enroulé.

5. Dispositif d'étanchéité suivant l'une des revendications 1 à 4,
**caractérisé** par le fait
que le corps (12) en matériau léger est de forme essentiellement cylindrique.

6. Dispositif d'étanchéité suivant l'une des revendications 1 à 5,
**caractérisé** par le fait
que la zone d'étanchéité (6) en élastomère du joint (3) présente, en direction radiale, une plus grande épaisseur que l'espace annulaire (11).

7. Dispositif d'étanchéité suivant l'une des revendications 1 à 6,
**caractérisé** par le fait
que la zone d'étanchéité (6) en élastomère du joint (3) présente un prolongement (18) plus mince, en forme de coin, s'étendant jusqu'à proximité de l'arrondi d'entrée (19) de l'about femelle.

8. Dispositif d'étanchéité suivant l'une des revendications 1 à 7,
**caractérisé** par le fait
que la zone d'étanchéité (6) en élastomère est munie de gorges axiales (15, 16) débouchant dans l'espace annulaire (11).

9. Dispositif d'étanchéité suivant l'une des revendications 1 à 8,
**caractérisé** par le fait
que le prolongement (7) présente une tête (10) en T.
